# EUROPÄISCHE PATENTSCHRIFT

(11) **EP 0 643 465 B1**
(45) Veröffentlichungstag und Bekanntmachung des Hinweises auf die Patenterteilung: **02.05.1997**
(21) Anmeldenummer: 94113350.6
(22) Anmeldetag: 26.08.1994
(51) Int. Cl.: H02K 9/06, H02K 9/26

(54) **Luftgekülte rotierende elektrische Maschine**
Air-cooled rotating electric machine
Machine électrique rotative refroidi par air

(30) Priorität: 15.09.1993 DE 4331243
(43) Veröffentlichungstag der Anmeldung: 15.03.1995
(73) Patentinhaber: ASEA BROWN BOVERI AG, 5401 Baden (CH)
(72) Erfinder: Zimmermann Hans, CH-8617 Mönchaltorf (CH)

(56) Entgegenhaltungen:
- GB-A- 104 250
- US-A- 1 725 667
- US-A- 4 547 688
- BBC-NACHRICHTEN, Bd. 10, Nr. 490, Oktober 1963, Seiten 490-497; K. JÄGER : 'Fremdbelüftung bei Gleichstrom-Lagerschildmaschinen'
- BROWN BOVERI REVIEW, Nr. 3, März 1986, Seiten 133-139; H. HAASE et al.: 'Air-Cooled Turbogenerators in the 200 MVA Power Class'
- PATENT ABSTRACTS OF JAPAN vol. 5, no. 186 (E-84) (858) 25. November 1981 & JP-A-56 112 853
- PATENT ABSTRACTS OF JAPAN vol. 9, no. 240 (E-345) (1963) 26. September 1985 & JP-A-60 091 841

## Beschreibung

### TECHNISCHES GEBIET

Die Erfindung bezieht sich auf ein Verfahren zur Kühlung einer luftgekühlten rotierenden elektrische Maschine mit offenem Kühlkreilauf, bei welcher mechanisch gefilterte Umgebungsluft durch beidseits auf der Rotorwelle angeordnete Ventilatoren durch die Kühlkanäle im Stator und Rotor und den Maschinenluftspalt geleitet wird und danach wieder an die Umgebung abgegeben wird.
Die Erfindung bezieht sich ferner auf eine rotierende elektrische Maschine, die nach diesem Verfahren gekühlt ist.

Eine gasgekühlte elektrische Maschine mit diesen Merkmalen ist beispielsweise aus "Brown Boveri Technik", 3/86, Seiten 133 - 138, insbesondere Bild 3 auf Seite 135, bekannt.

### TECHNOLOGISCHER HINTERGRUND UND STAND DER TECHNIK

Prinzip der sogenannten indirekten Kühlung ist es, die in den Statorwicklungsstäben entstehenden Verluste an das Kühlmedium (Luft) abzugeben. Der hauptsächliche Wärmefluss findet dabei vom Stabkupfer über die Isolation in den Zahnbereich des Statorblechkörpers statt. Von den Statorzähnen wird die Wärme an das Kühlmedium abgegeben.

Bei Maschinen mit offenem Kühlkreilauf wird mechanisch gefilterte Umgebungsluft durch beidseits auf der Rotorwelle angeordnete Ventilatoren durch Kühlkanäle im Stator und Rotor und den Maschinenluftspalt geleitet und danach wieder an die Umgebung abgegeben. Die mechanische Filterung erfolgt dabei in herkömmlichen Staubfiltern und dergleichen. Bei extremem Umweltbedingungen, z.B. hohem SO₂-Anteil in der Luft, geht man entweder zu einem geschlossenen Kühlkreis über, oder es wird die gesamte Kühlluft nach ihrer "mechanischen" Filterung auch durch ein Schadstofffilter, z.B. ein Aktivkohlefilter, geleitet. In beiden Fällen erhöhen sich die Investitionskosten.

### KURZE DARSTELLUNG DER ERFINDUNG

Der Erfindung liegt die Aufgabe zugrunde, eine Verfahren zur Kühlung einer luftgekühlten rotierenden elektrischen Maschine mit offenem Kühlkreislauf anzugeben, das mit einem Minimum an Investitionskosten auskommt.

Diese Aufgabe wird erfindungsgemäss dadurch gelöst, dass die mechanisch gefilterte Luft unmittelbar dem Stator dem Maschinenluftspalt zugeführt wird, und dass nur die dem Rotor zuzuführende Kühlluft einer Nachfilterung unterzogen wird, wobei die dem Stator und gegebenenfalls Maschinenluftspalt zuzuführende mechanisch gefilterte Kühlluft durch die Ventilatoren gefördert wird, während die dem Rotor zuzuführende Kühlluft auf getrenntem Weg in den Rotor geleitet wird. Vorzugsweise wird dabei zur Förderung der Kühlluft für den Rotor dessen Eigenventilation ausgenutzt.

Der Erfindung liegt dabei die Erkenntnis zugrunde, dass mit schädlichen Gasen kontaminierte Kühlluft aufgrund der übersichtlichen Kühlgasführung im Stator weniger Schäden an oder in den Kühlkanälen anrichtet als in den eher komplexen Kühlluftwegen im Rotor. Die auf diese Weise erzielbare Einsparungen betreffen zunächst die Investitionskosten: Die Schadstofffilter werden kleiner, weil nur noch ein Bruchteil (etwa 15 bis 20%) der Kühlluft aufbereitet werden muss. Darüber hinaus erhöhen sich die Standzeiten der Schadstofffilter.

Die rotierende elektrische Maschine, welche nach dem erfindungsgemässen Verfahren gekühlt ist, wird mit den Merkmalen des Anspruchs 3 definiert. Sie umfasst einen ausserhalb des Maschinengehäuses angeordneten mechanischen Filter, vom dem aus ein erster Kühlluftstrom direkt den Ventilatoren auf beiden Maschinenseiten über erste Kühlluftführungen zuführbar ist, und einen Schadstofffilter, über den ein Teil der den mechanischen Filter verlassenden vorgefilterten Kühlluft über zweite Kühlluftführungen direkt in den Rotorraum zuführbar ist.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig. 1: einen vereinfachten Längsschnitt eines luftgekühlten Generators bekannter Bauart mit offenem Kühlkreislauf und getrennter Kühlluftzufuhr zum Rotor;
- Fig. 2: einen vergrösserten Ausschnitt von Fig.1, das die besondere Ausbildung der Rotorendpartie sowie die Frischluftwege zum Rotor und Stator verdeutlicht;
- Fig.3: eine alternative Ausführung der Kühlluftzufuhr zum Rotor mit Kanälen in der Rotorwelle.

### WEGE ZUR AUSFÜHRUNG DER ERFINDUNG

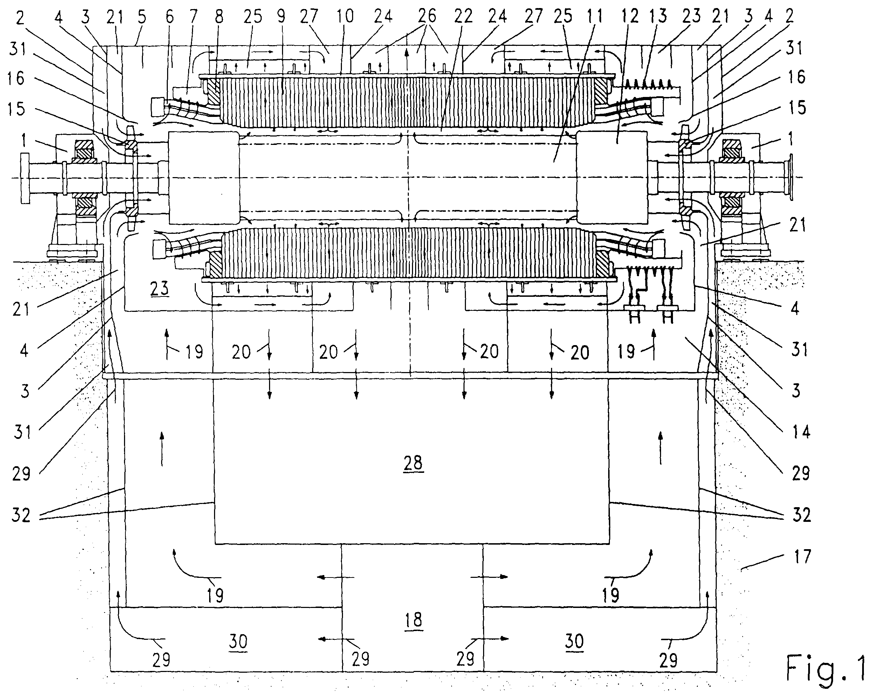

In Fig.1 ist mit 1 ein Bocklager, mit 2 eine Aussenverschalung, mit 3 eine erste Innenverschalung, mit 4 eine zweite Innenverschalung und mit 5 ein Maschinengehäuse bezeichnet. Der Wickelkopf 6 stützt sich an Abstützplatten 7 an einer Statorpressplatte 8 ab. Im Statorblechkörper 9 sind radiale Belüftungsschlitze 9a zwischen den einzelnen Teilblechkörpern vorgesehen. Zugstangen 10 pressen den Statorblechkörper samt Statorpressplatten 8 zusammen. Der Rotor 11 weist an bei den Enden Rotorkappen 12 auf. Die Wicklungsverbindungen im Wickelkopfraum sind mit 13 bezeichnet, die Phasen- und Sternpunktklemmen mit 14. An beiden Maschinenende ist je ein Axialventilator 15 vorgesehen. Das radial innere Ende der zweiten Innenverschalung 4 ist als Luftführungsring 16 ausgebildet. In einer Fundamentgrube 17 unterhalb der Maschine ist ein Staubfilter 18 vorgesehen. Die Kaltluft hinter dem Staubfilter 18 ist durch Pfeile 19, die Heissluft aus dem Stator durch Pfeile 20 gekennzeichnet. Andere (nicht näher bezeichnete) Pfeile verdeutlichen die verschiedenen Kühlluftströme im Maschineninneren. Im nachfolgenden ist nur eine Maschinenhälfte zu betrachten, da die Maschine - was die Kühlung betrifft - symmetrisch aufgebaut ist.

Kalte Umgebungsluft strömt durch den Staubfilter 18 und den Raum 21 zwischen erster Innenverschalung 3 und Innenverschalung 4 zum Ventilator 15. Dann verzweigt sich der Kühlluftstrom. Ein erster, kleinerer Teilstrom strömt in den Maschinenluftspalt 22, ein zweiter Teilstrom gelangt durch den Wickelkopfraum 23 in den Maschinenrücken, dem Raum zwischen Maschinengehäuse 5 und Statorblechkörper 9.

Im Maschinenrücken sind durch Gehäusespanten 24 und radiale und axiale Trennwände Kalt- und Heissgaskammern gebildet. Im Beispielsfall je eine Heisgaskammer 25 an beiden Maschinenenden und eine Heissgaskammer 26 in Maschinenmitte, sowie je eine Kaltgaskammer 27 zwischen den Kammern 25 und 26. In letztere strömt der genannte zweite Kühlluftstrom vom Ventilator 15 ein, wird durch die Belüftungsschlitze 9a zwischen den Teilblechpaketen des Statorblechkörpers 9 gepresst und gelangt in die genannten Heisgaskammern 25 und 26. Von den Heisgaskammern 25 und 26 gelangt das heisse Kühlgas über grossflächige Durchbrüche an der Unterseite des Maschinengehäuses 5 in einen Ausströmraum 28 in der Fundamentgrube 17 und von dort ins Freie.

Insoweit entspricht der Aufbau und die Kühlluftführung der aus "Brown Boveri Technik" a.a.O. bekannten Maschine.

Im Unterschied zu der aus "Brown Boveri Technik" a.a.O. bekannten Maschine, wo sich der Kühlluftstrom hinter dem Ventilator 15 zusätzlich in einen dritten Kühlluftstrom zur Kühlung des Rotors verzweigt, erfolgt erfindungsgemäss hier die Trennung der Kühlluft zum Stator und zum Rotor bereits ausserhalb des eigentlichen Maschinengehäuses 5.

Wie bereits einleitend ausgeführt, muss bei luftgekühlten elektrischen Maschinen die aus der Umgebung angesaugte Kühlluft von Staub- und anderen Partikeln und auch Wasserdampf befreit werden. Dies erfolgt in der Regel durch Staub- oder Schmutzabscheider, im nachfolgenden mechanischer Filter bezeichnet. Im Beispielsfall ist dieser mechanische Filter 18 in der Fundamentgrube 17 unterhalb der Maschine angeordnet. Er kann auch neben der Maschine angeordnet sein. Bei Gasturbogruppen, wo die zugeführte Luft ebenfalls mechanisch gefiltert wird, bevor sie dem Verdichter zugeführt wird, kann dann der mechanische Filter 18 entfallen.

Vom Filter 18 aus wird die mechanisch gefilterte Luft direkt in den Ringraum 21 zwischen der ersten und zweiten Innenverschalung 3 bzw. 4 geleitet. Ein Teilluftstrom 29 wird durch je ein Aktivkohlefilter 30 geführt, dort von schädlichen Bestandteilen wie Schwefeldioxid etc. befreit. Anstelle eines Aktivkohlefilters kann auch ein andere Abscheidevorrichtung für schädliche Substanzen treten, welche diesen Schadstoffen angepasst ist. Erst danach wird die auf diese Weise nachgefilterte Luft in den Raum 31 zwischen Aussenverschalung 2 und erster Innenverschalung 3 geleitet. Die Unterteilung der Fundamentgrube 17 in die verschiedenen Luftführungsräume erfolgt durch Trennwände 32.

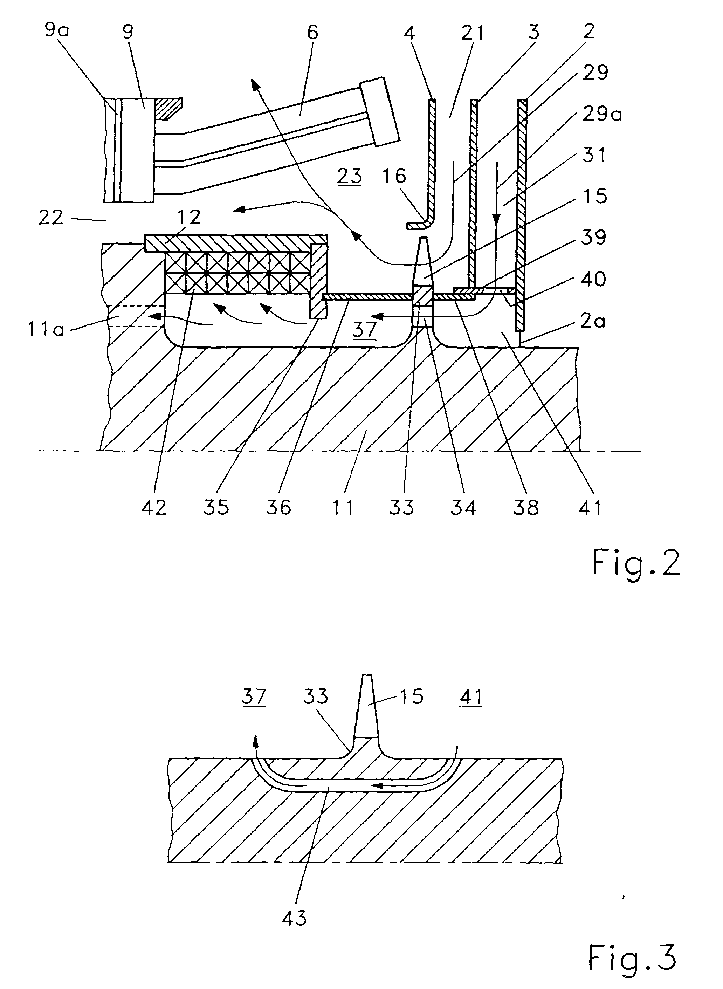

Diese neue Kühlgasführung erfordert selbsverständlich Modifikationen an der Maschine selbst. Diese sollen nun anhand der Fig.2, die einen vergösserten, nur in unwesentlichen Details modifizierten Längsschnitt durch die Endpartie der Maschine nach Fig.1 zeigt, erläutert werden. Dabei sind gleich oder gleichwirkende Teile mit denselben Bezugszeichen wie in Fig.1 versehen.

Der Axialventilator 15 ist auf einem Wellenbund 33 befestigt. In diesem Wellenbund sind über seinen Umfang verteilt axial verlaufende Durchgangsbohrungen 34 vorgesehen. Zwischen der Kappenplatte 35 der Rotorkappe 12 und dem Ventilator 15 ist eine erste zylindrische Abdeckung 36 vorgesehen. Diese trennt den Wickelkopfraum 23 vom Rotorraum 37. Eine nur am besagten Wellenbund 33 befestigte zweite zylindrische Abdeckung 38 wirkt zusammen mit einer dritten zylindrischen Abdeckung 39. Letztere ist an der ersten Innenverschalung 2 und an der Aussenverschalung 2 befestigt und weist über ihren Umfang verteilte Durchbrüche 40 auf. Die aufeinander zugewandten freien Enden der zweiten und dritten Adeckung 38 bzw. 39 bilden dabei eine rotierende Dichtung zwischen den Räumen 21 und 31. Der Vollständigkeit halber ist auch die Wellendichtung 2a zwischen Rotorwelle 11 und Aussenverschalung 2 angedeutet.

Der vom Aktivkohlefilter 30 kommende Kühlluftstrom gelangt durch den Raum 31 und die Durchbrüche 40 in den Raum 41 zwischen Rotorwelle und den Abdeckungen 38 und 39, passiert die Bohrungen 34 im Wellenbund und strömt in den Rotorraum 37 ein. Dort verzweigt er sich im wesentlichen in zwei Teilströme. Ein Teilstrom passiert den Rotorwickelkopf 42, der andere Teilstrom strömt durch die Rotorkühlkanäle 11a. Beide Teilströme vereinigen sich im Maschinenluftspalt 22 und gelangen von dort aus über die Kühlschlitze 9a im Statorblechkörper 9 in die Heissgaskammern 25 und 26 (vgl. Fig.1). Als Fördermittel für die Rotorkühlluft bedarf es keines besonderen Ventilators, weil hier die Eigenventilation des Rotors ausgenützt wird.

Bei Rotorkonstruktionen ohne besonders ausgeprägten Wellenbund 33 lässt sich die Kühlluftzufuhr vom Raum 41 zum Rotorraum 37 auch dadurch verwirklichen, dass in der Rotorwelle Kühlluftpassagen 43 unter dem Wellenbundes eingearbeitet sind. Die Herstellung derartiger Passagen 43 ist jedoch aufwendig und schwächt darüber hinaus die Rotorwelle.

### BEZEICHNUNGSLISTE

- 1: Bocklager
- 2: Aussenverschalungen
- 2a: Wellendichtung
- 3: erste Innenverschalung
- 4: zweite Innenverschalungen
- 5: Maschinengehäuse
- 6: Wickelköpfe
- 7: Abstützplatten für 6
- 8: Statorpressplatten
- 9: Statorblechkörper
- 9a: Belüftungsschlitze in 9
- 10: Zugstangen
- 11: Rotor
- 11a: Kühlkanäle in 11
- 12: Rotorkappen
- 13: Wicklungsverbindungen
- 14: Phasen- und Sternpunktklemmen
- 15: Axialventilator
- 16: Luftführungsring an 4
- 17: Fundamentgrube
- 17a: Fundamentsockel
- 18: Staubfilter
- 19: Kaltluft nach 18
- 20: Heissluft aus 9
- 21: Raum zwischen 3 und 4
- 22: Maschinenluftspalt
- 23: Wickelkopfraum
- 24: Gehäusespanten
- 25: endseitige Heissgaskammern
- 26: mittlere Heissgaskammer
- 27: Kaltgaskammern
- 28: Ausströmraum in 17
- 29: Teilstrom zu 30
- 30: Aktivkohlefilter
- 31: Raum zwischen 2 und 3
- 32: Trennwände in 17
- 33: Wellenbund an 11
- 34: axiale Bohrungen in 33
- 35: Kappenplatte
- 36: erste zylindrische Abdeckung
- 37: Rotorraum
- 38: zweite zylindrische Abdeckung
- 39: dritte zylindrische Abdeckung
- 40: Durchbrüche in 39
- 41: Raum zwischen 11 und 38,39
- 42: Rotorwickelkopf
- 43: Kühlluftpassagen in 11

## Patentansprüche

1. Verfahren zur Kühlung einer luftgekühlten rotierenden elektrische Maschine mit offenem Kühlkreilauf, bei welcher mechanisch gefilterte Umgebungsluft durch beidseits auf der Rotorwelle angeordnete Ventilatoren (15) durch die Kühlkanäle (9a,11a) im Stator (9) und Rotor (11) und den Maschinenluftspalt (22) geleitet wird und danach wieder an die Umgebung abgegeben wird, dadurch gekennzeichnet, dass die mechanisch gefilterte Luft unmittelbar dem Stator (9) und dem Maschinenluftspalt (22) zugeführt wird, und dass nur die dem Rotor (11) zuzuführende Kühlluft einer Nachfilterung unterzogen wird, wobei die dem Stator und gegebenenfalls Maschinenluftspalt zuzuführende mechanisch gefilterte Kühlluft durch die Ventilatoren gefördert wird, während die dem Rotor zuzuführende Kühlluft auf getrenntem Weg in den Rotor geleitet wird.

2. Verfahren nach Anspruch 1, dadurch gekennzeichnet, dass die Förderung der Kühlluft für den Rotor (11) durch Eigenventilation der Rotors erfolgt.

3. Luftgekühlte rotierende elektrische Maschine mit offenem Kühlkreislauf, mit einem mit Kühlkanälen (11a) versehenem Rotor, einem mit Kühlkanälen (9) versehenem Statorblechkörper (9), einem Maschinengehäuse (5), Aussenverschalungen (2) an beiden Gehäusestirnseiten, an jedem Ende der Welle des Rotors (11) Ventilatoren (15), welche von einem mechanischen Filter (18) gefilterte Kühlluft durch Kammern (21) an den Maschinenstirnseiten in das Maschineninnere fördern, welche Kammern durch zweite Innenverschalungen (4) vom Maschineninneren getrennt sind, dadurch gekennzeichnet, dass besagte Kammern durch eine erste Innenverschalung (3) unterteilt sind, wobei die im wesentlichen durch die Aussenverschalung (2) und die erste Innenverschalung (3) gebildete erste Kammer (31) nachgefilterte Kühlluft unter Umgehung des Ventilators (15) direkt dem Rotor zuführbar ist, dass der im wesentlichen durch die erste (3) und die zweite Innenverschalung (4) gebildeten zweiten Kammer (21) nur die vorgefilterte Kühlluft zuführbar ist, und dass Mittel (36) zur Trennung des Ausströmraums (23) des Ventilators (15) vom Rotorraum (37) vorgesehen sind.

4. Maschine nach Anspruch 3, dadurch gekennzeichnet, zur Verbindung der ersten Kammer (31) mit dem Rotorraum (37) Kanäle (33;43) unterhalb des Ventilators (15) vorgesehen sind.

5. Maschine nach Anspruch 4, dadurch gekennzeichnet, dass der Ventilator (15) auf einem Wellenbund (33) befestigt ist und die Kanäle durch annähernd axial verlaufende Durchgangsbohrungen (34) im Wellenbund (33) gebildet sind.

6. Maschine nach Anspruch 4, dadurch gekennzeichnet, dass die Kanäle durch Passagen (43) in der Rotorwelle gebildet sind.

7. Maschine nach einem der Ansprüche 3 bis 6, dass der Rotorraum (37) vom Ausströmraum (23) des Ventilators (15) durch eine erste Zylindrische Abdeckung (36) getrennt ist, die vorzugsweise an der Kappenplatte (35) der Rotorkappe (12) befestigt ist.

## Claims

1. Method for cooling an air-cooled rotating electrical machine having an open cooling circuit, in the case of which mechanically filtered environmental air is passed through the cooling ducts (9a, 11a) in the stator (9) and rotor (11) and the machine air gap (22) by means of fans (15) which are arranged at both ends of the rotor shaft and, after this, is emitted to the environment again, characterized in that the mechanically filtered air is supplied directly to the stator (9) and to the machine air gap (22), and in that only the cooling air which is to be supplied to the rotor (11) is subjected to refiltering, the mechanically filtered cooling air which is to be supplied to the stator and possibly to the machine air gap being passed through the fans, while the cooling air which is to be supplied to the rotor is passed into the rotor on a separate route.

2. Method according to Claim 1, characterized in that the cooling air for the rotor (11) is conveyed by the rotor's own ventilation.

3. Air-cooled rotating electrical machine having an open cooling circuit, having a rotor which is provided with cooling ducts (11a), having a laminated stator core (9) which is provided with cooling ducts (9) [sic], having a machine housing (5), outer casings (2) on the two housing ends, fans (15) on each end of the shaft of the rotor (11), which fans pass cooling air, which is filtered by a mechanical filter (18), through chambers (21) on the machine ends into the machine interior, which chambers are separated from the machine interior by second inner casings (4), characterized in that the said chambers are divided by a first inner casing (3), the first chamber (31), which is formed essentially by the outer casing (2) and the first inner casing (3), being capable of supplying refiltered cooling air directly to the rotor bypassing the fan (15), in that the second chamber (21), which is formed essentially by the first inner casing (3) and the second inner casing (4), can be supplied only with the prefiltered cooling air, and in that means (36) are provided for separating the outlet flow space (23) of the fan (15) from the rotor space (37).

4. Machine according to Claim 3, characterized in that ducts (33; 43) are provided underneath the fan (15) in order to connect the first chamber (31) to the rotor space (37).

5. Machine according to Claim 4, characterized in that the fan (15) is mounted on a shaft collar (33) and the ducts are formed by through-holes (34), which run approximately axially, in the shaft collar (33).

6. Machine according to Claim 4, characterized in that the ducts are formed by passages (43) in the rotor shaft.

7. Machine according to one of Claims 3 to 6, [lacuna] in that the rotor space (37) is separated from the outlet flow space (23) of the fan (15) by means of a first cylindrical cover (36), which is preferably mounted on the cap plate (35) of the rotor cap (12).

## Revendications

1. Procédé de refroidissement d'une machine électrique rotative refroidie à l'air avec un circuit de refroidissement ouvert, dans laquelle de l'air atmosphérique filtré mécaniquement est conduit par des ventilateurs (15), disposés de part et d'autre sur l'arbre du rotor, à travers les canaux de refroidissement (9a, 11a) dans le stator (9) et dans le rotor (11) et dans l'entrefer (22) de la machine, et est ensuite rejeté dans l'atmosphère, caractérisé en ce que l'air filtré mécaniquement est envoyé directement au stator (9) et à l'entrefer (22) de la machine, et en ce que seul l'air de refroidissement à envoyer au rotor (11) est soumis à un refiltrage, l'air de refroidissement filtré mécaniquement à envoyer au stator et le cas échéant à l'entrefer de la machine étant transporté par les ventilateurs, tandis que l'air de refroidissement à envoyer au rotor est conduit au rotor par un chemin distinct.

2. Procédé suivant la revendication 1, caractérisé en ce que le transport de l'air de refroidissement pour le rotor (11) est réalisé par la ventilation propre du rotor.

3. Machine électrique rotative refroidie à l'air avec un circuit de refroidissement ouvert, avec un rotor pourvu de canaux de refroidissement (11a), un corps statorique feuilleté (9) pourvu de canaux de refroidissement (9a), un corps de machine (5), des coquilles externes (2) sur les deux faces d'extrémité du corps, des ventilateurs (15) à chaque extrémité de l'arbre du rotor (11), qui transportent l'air de refroidissement, filtré par un filtre mécanique (18), à l'intérieur de la machine à travers des chambres (21) situées aux faces d'extrémité de la machine, chambres qui sont séparées de l'intérieur de la machine par des secondes coquilles internes (4), caractérisée en ce que lesdites chambres sont divisées par une première coquille interne (3), l'air de refroidissement refiltré venant de la première chambre (31) essentiellement formée par la coquille externe (2) et la première coquille interne (3) pouvant être envoyé directement au rotor (11) en évitant le ventilateur (15), en ce que seul l'air de refroidissement préfiltré peut être envoyé à la seconde chambre (21) formée essentiellement par la première (3) et le seconde (4) coquille interne, et en ce qu'il est prévu des moyens (36) pour séparer la chambre d'évacuation (23) du ventilateur (15) et la chambre de rotor (37).

4. Machine suivant la revendication 3, caractérisée en ce qu'il est prévu, sous le ventilateur (15), des canaux (33; 43) pour relier la première chambre (31) à la chambre de rotor (37).

5. Machine suivant la revendication 4, caractérisée en ce que le ventilateur (15) est fixé sur une collerette (33) de l'arbre et en ce que les canaux sont formés par des trous de passage (34) orientés à peu près axialement dans la collerette (33) de l'arbre.

6. Machine suivant la revendication 4, caractérisée en ce que les canaux sont formés par des passages (43) dans l'arbre du rotor.

7. Machine suivant l'une quelconque des revendications 3 à 6, caractérisée en ce que la chambre de rotor (37) est séparée de la chambre d'évacuation (23) du ventilateur (15) par un premier couvercle cylindrique (36), qui est de préférence fixé à la plaque de coiffe (35) de la coiffe (12) du rotor.
